# EUROPÄISCHE PATENTSCHRIFT

(11) **EP 2 478 207 B1**
(45) Veröffentlichungstag und Bekanntmachung des Hinweises auf die Patenterteilung: **01.01.2014**
(21) Anmeldenummer: 10779482.8
(22) Anmeldetag: 02.09.2010
(51) Int. Cl.: F02M 37/22

(54) **KRAFTSTOFFFILTER EINER BRENNKRAFTMASCHINE**
FUEL FILTER OF AN INTERNAL COMBUSTION ENGINE
FILTRE À CARBURANT DE MOTEUR À COMBUSTION INTERNE

(30) Priorität: 15.09.2009 DE 102009041298
(43) Veröffentlichungstag der Anmeldung: 25.07.2012
(73) Patentinhaber: Hengst GmbH & Co. KG, 48147 Münster (DE)
(72) Erfinder: HÖLKER, Jürgen, 48301 Nottuln (DE); VINKELAU, Christian, 48720 Rosendahl (DE)
(74) Vertreter: Linnemann, Winfried
(86) Internationale Anmeldenummer: PCT/EP2010/062906
(87) Internationale Veröffentlichungsnummer: WO 2011/032844

(56) Entgegenhaltungen:
- DE-A1- 19 519 352
- DE-A1- 19 538 883
- DE-T2-602004 006 277

## Beschreibung

Die vorliegende Erfindung betrifft einen Kraftstofffilter einer Brennkraftmaschine, insbesondere eines Dieselmotors, mit einem Filtergehäuse mit einem im Betrieb unteren Gehäusesockel und einem im Betrieb oberen, abnehmbaren Gehäusedeckel, wobei in dem Filtergehäuse je ein Rohkraftstoffzulauf und Reinkraftstoffablauf vor-gesehen sind, wobei im Filtergehäuse ein von dem Kraftstoff radial von außen nach innen durchströmbarer, auswechselbarer Ringfiltereinsatz angeordnet ist, der einen Innenraum des Filtergehäuses in einen Rohbereich und einen Reinbereich unterteilt, wobei im Inneren des Ringfiltereinsatzes ein Entlüftungsrohr angeordnet ist, durch welches ein einerseits über eine Entlüftungsdrossel oder ein Entlüftungsventil mit dem Rohbereich und andererseits mit einem Tankrücklauf in dem Filtergehäuse verbundener Strömungskanal als Entlüftungskanal verläuft, wobei der Rohkraftstoffzulauf im Gehäusesockel des Filtergehäuses angeordnet ist und wobei im oder am Kraftstofffilter ein vom Rohkraftstoffzulauf zu einem im Betrieb oberen Teil des Rohbereichs des Innenraums des Filtergehäuses führender Strömungskanal vorgesehen ist.

Ein Kraftstofffilter der vorstehend genannten Art ist aus DE 195 38 883 A1 bekannt. Das Entlüftungsrohr hat hier nur die einzige Funktion des Entlüftungskanals, was nicht im Sinne einer allgemein und besonders bei modernen Brennkraftmaschinen angestrebten Integration mehrerer Funktionen in einem Bauteil ist.

Ein weiterer Kraftstofffilter ist aus DE 60 2004 006 277 T2 bekannt. Der Rohkraftstoffzulauf ist bei diesem Kraftstofffilter entweder unten am Umfang oder an der unteren Stirnwand des Filtergehäuses vorgesehen. Der Stützkörper ist bei diesem Kraftstofffilter zweiteilig ausgebildet, wobei ein radial äußerer Teil des Stützkörpers einen Teil des Filtereinsatzes bildet und wobei ein radial innerer Teil des Stützkörpers einen Teil des Filtergehäuses bildet. Der zu reinigende Kraftstoff strömt um den Außenumfang des Filtereinsatzes herum von unten nach oben und durchströmt dann den Filtereinsatz radial von außen nach innen. Der gereinigte Kraftstoff fließt nahe dem oberen Ende des Stützkörpers in dessen zentralen Strömungskanal und durch diesen zum Reinkraftstoffablauf. Zum Entlüften des Filtergehäuses dient eine Entlüftungsdrossel in einer oberen Stirnscheibe des Ringfiltereinsatzes, wobei über die Entlüftungsdrossel der Rohbereich des Gehäuses mit dem zweiten Strömungskanal in Strömungsverbindung steht. Andererseits steht der zweite Strömungskanal in Stützkörper in Strömungsverbindung mit einem Tankrücklauf.

Als nachteilig ist bei diesem bekannten Kraftstofffilter anzusehen, dass aufgrund der Strömung des zu reinigenden Kraftstoffs von unten nach oben am Außenumfang des Filtereinsatzes die Abscheidung von im Kraftstoff mitgeführten Wassertropfen erschwert wird.

Ein weiterer Kraftstofffilter ist aus dem Dokument US 5 922 199 A bekannt. Dieser Kraftstofffilter ist als hängendes Bechersystem ausgeführt, wobei ein becherförmiges Gehäuse als Unterteil an einen hier den oberen Teil des Kraftstofffilters bildenden Sockel angeschraubt ist. Eine Wartung des Kraftstofffilters ist hier nur von unten her durch Abschrauben des hängenden Bechers möglich. Dabei verbleibt nachteilig immer Kraftstoff in dem Becher, was leicht zu einer Umweltverschmutzung führen kann und was den Wechsel des Filtereinsatzes erschwert.

Für die vorliegende Erfindung stellt sich daher die Aufgabe, einen Kraftstofffilter der eingangs genannten Art zu schaffen, der die vorstehend angegebenen Nachteile vermeidet und bei dem insbesondere eine günstige Anordnung des Rohkraftstoffzulaufs ermöglicht wird, die Abscheidung von Wassertropfen aus dem Kraftstoff gefördert wird und eine hohe Funktionsintegration erzielt wird.

Die Lösung dieser Aufgabe gelingt erfindungsgemäß mit einem Kraftstofffilter der eingangs genannten Art, der dadurch gekennzeichnet ist, dass das Entlüftungsrohr als Stützkörper für den Ringfiltereinsatz ausgebildet ist, dass durch den Stützkörper ein einerseits mit dem Reinbereich und andererseits mit dem Reinkraftstoffablauf verbundener weiterer Strömungskanal verläuft und dass der vom Rohkraftstoffzulauf zu dem im Betrieb oberen Teil des Rohbereichs führende Strömungskanal als dritter Strömungskanal durch den Stützkörper verläuft.

Die erfindungsgemäße Anordnung des Rohkraftstoffzulaufs im Gehäusesockel bietet eine günstige Anordnung, die die Wartung des Kraftstofffilters von oben her nicht behindert. Durch die Führung des Kraftstoffs in den oberen Teil des Rohbereichs des Innenraums des Gehäuses ergibt sich am Außenumfang des Filtereinsatzes eine Strömungsrichtung des Kraftstoffs von oben nach unten, welche die Abscheidung und das Absetzen von Wassertropfen aus dem Kraftstoff in einem unteren Bereich des Filtergehäuses fördert. Dadurch, dass das Entlüftungsrohr als Stützkörper für den Ringfiltereinsatz ausgebildet ist und dass der vom Rohkraftstoffzulauf zu dem im Betrieb oberen Teil des Rohbereichs führende Strömungskanal als dritter Strömungskanal durch den Stützkörper verläuft, werden vorteilhaft drei Strömungskanäle durch den Stützkörper geführt, wodurch ein hoher Integrationsgrad von Funktionen mit wenigen Einzelteilen erreicht wird.

Um eine stabile Konstruktion des Stützkörpers mit möglichst widerstandsarmen Strömungskanälen zu ermöglichen, wird vorgeschlagen, dass einer der drei Strömungskanäle konzentrisch im Stützkörper verläuft und dass die beiden anderen Strömungskanäle exzentrisch und in Umfangsrichtung des Stützkörpers voneinander beabstandet in diesem verlaufen.

Eine weitere vorteilhafte Ausgestaltung sieht vor, dass der konzentrisch im Stützkörper verlaufende Strömungskanal der mit dem Tankrücklauf verbundene, der Entlüftung dienende Strömungskanal ist und dass die Entlüftungsdrossel oder das Entlüftungsventil an einem oberen Ende des Stützkörpers in einer den Rohbereich von diesem Strömungskanal trennenden Wandung des Stützkörpers ausgebildet oder angeordnet ist. Mit dieser Ausgestaltung kommt die Entlüftungsdrossel oder das Entlüftungsventil an einer so weit oben wie möglich im Filtergehäuse befindlichen Stelle zu liegen, so dass eine praktisch vollständige Entlüftung des Gehäuses gewährleistet ist.

Für eine einfache und schnelle mechanische und strömungsmäßige Verbindung des Kraftstofffilters mit der zugehörigen Brennkraftmaschine ist es günstig, wenn neben dem Rohkraftstoffzulauf auch der Reinkraftstoffablauf und der Tankrücklauf im Gehäusesockel des Filtergehäuses angeordnet sind und am Gehäusesockel Flanschund/oder Leitungsanschlüsse für den Rohkraftstoffzulauf, den Reinkraftstoffablauf und den Tankrücklauf vorgesehen sind.

Im Sinne einer möglichst einfachen Montierbarkeit des Kraftstofffilters ist es günstig, dass bevorzugt der Stützkörper an seinem unteren Ende mechanisch mit dem Gehäusesockel und strömungsmäßig mit dem Rohkraftstoffzulauf, dem Reinkraftstoffablauf und dem Tankrücklauf verbunden ist.

Eine besonders günstige Verbindung, die bei Bedarf auch lösbar ist, wird dadurch erzielt, dass bevorzugt der Gehäusesockel und der Stützkörper mit zusammenwirkenden Gewinden für deren Verbindung miteinander versehen sind und dass die Gewinde so ausgebildet sind, dass im miteinander verschraubten Zustand der Stützkörper relativ zum Gehäusesockel in Umfangsrichtung eine definierte, für die strömungsmäßige Verbindung mit dem Rohkraftstoffzulauf, dem Reinkraftstoffablauf und dem Tankrücklauf winkelgerechte Verschraubungsendstellung einnimmt.

Da erfindungsgemäße Kraftstofffilter ein Massenteil sind, ist es wesentlich, dass sie kostengünstig in großen Mengen hergestellt werden können. Ein Beitrag hierzu wird dadurch geleistet, dass vorzugsweise der Stützkörper mit den darin verlaufenden drei Strömungskanälen ein einstückiges Spritzgussteil aus Kunststoff oder ein einstückiges Druckgussteil aus Leichtmetall ist.

Um zu vermeiden, dass aus dem Rohkraftstoff abgeschiedenes Wasser die Filterfunktion beeinträchtigt oder in den Reinkraftstoff gelangt, schlägt die Erfindung vor, dass der Gehäusesockel mit einem im Betrieb einen untersten Teil des Kraftstofffilters bildenden Wassersammelraum ausgeführt oder verbunden ist. Dazu kann beispielsweise unten an das Filtergehäuse ein Wassersammelbecher angebaut, z.B. angeschraubt, sein.

Schließlich ist erfindungsgemäß noch vorgesehen, dass der Gehäusedeckel und der Ringfiltereinsatz über eine axiale Zugkräfte übertragende, lösbare Rastverbindung miteinander verbunden sind und dass durch eine Bewegung des Gehäusedeckels zusammen mit dem Ringfiltereinsatz relativ zum Filtergehäuse und zum Stützkörper nach oben eine unmittelbare Strömungsverbindung von dem Rohbereich zu dem Tankrücklauf freigebbar ist. Hierdurch wird erreicht, dass bei einer Wartung des Kraftstofffilters mit einem Abnehmen des Gehäusedeckels der Filtereinsatz mit dem Deckel zusammen abgehoben werden kann. Gleichzeitig wird dafür gesorgt, dass in Filtergehäuse befindlicher Kraftstoff aus dem Gehäuse durch den Tankrücklauf abgeleitet wird. Bei seinem Entnehmen aus den Filtergehäuse ist dann der Filtereinsatz praktisch kraftstofffrei und eine Umweltverschmutzung wird damit vermieden.

Im Folgenden wird ein Ausführungsbeispiel der Erfindung anhand einer Zeichnung erläutert. Die Figuren der Zeichnung zeigen:
- Figur 1: einen Kraftstofffilter mit geschlossenem Gehäuse im Längsschnitt,
- Figur 2: den Kraftstofffilter aus Figur 1 mit geöffnetem Gehäuse und entferntem Filtereinsatz in Ansicht von oben,
- Figur 3: den Kraftstofffilter in einem Querschnitt in Höhe eines Gehäusesockels des Filtergehäuses,
- Figur 4: einen Stützkörper als Teil des Kraftstofffilters in perspektivischer Ansicht schräg von unten,
- Figur 5: den Stützkörper aus Figur 4 in Seitenansicht,
- Figur 6: den Stützkörper aus Figur 4 und Figur 5 in einer Ansicht von unten,
- Figur 7: den Stützkörper aus den Figuren 4 bis 6 im Längsschnitt,
- Figur 8: den Kraftstofffilter in einem Teil-Längsschnitt mit eingesetztem Filtereinsatz und
- Figur 9: den Kraftstofffilter aus Figur 8 während eines Herausziehens des Filtereinsatzes, in gleicher Darstellung wie in Figur 8.

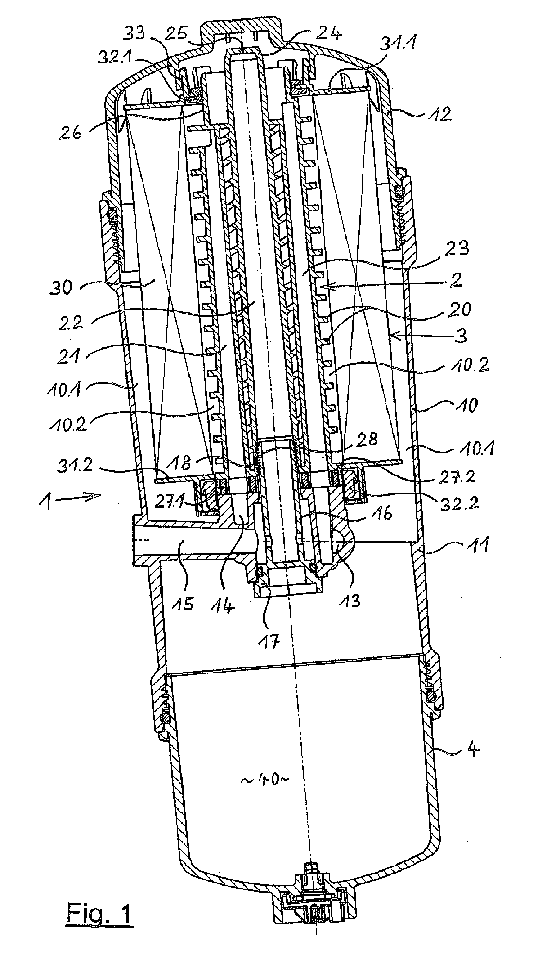

Figur 1 zeigt einen Kraftstofffilter 1 im Längsschnitt. Der Kraftstofffilter 1 besitzt ein Filtergehäuse 10 mit einem Gehäusesockel 11 und einem oberseitigen Gehäusedeckel 12. Im Filtergehäuse 10 ist ein Ringsfiltereinsatz 3 angeordnet. Im Inneren des Ringsfiltereinsatzes 3 befindet sich ein Stützkörper 2, der an seinem unteren Ende mit dem Gehäusesockel 11 verbunden, hier verschraubt ist. Den untersten Teil des Filtergehäuses 10 bildet ein Wassersammelbecher 4, der einen Wassersammelraum 40 bildet.

Der Stützkörper 2 besitzt an seinem Außenumfang eine Vielzahl von Stützrippen 20, die einen Filtermediumkörper 30 des Ringfiltereinsatzes 3 gegen ein Kollabieren schützen. Im Inneren des Stützkörpers 2 verlaufen insgesamt drei Strömungskanäle 21, 22 und 23. Der erste Strömungskanal 21 dient zur Führung von Reinkraftstoff aus einem Reinbereich 10.2 des Gehäuses 10 zu einem Reinkraftstoffablauf 14. Der zweite Strömungskanal 22 in Zentrum des Stützkörpers 2 dient zur Entlüftung des Filtergehäuses 10. Hierzu ist das obere Ende 24 des Stützkörpers 2 bis auf eine Entlüftungsdrossel 25 verschlossenen. Am unteren Ende steht der zweite Strömungskanal 22 mit einem Tankrücklauf 15 in Strömungsverbindung. Der dritte Strömungskanal 23 dient zur Führung von Rohkraftstoff aus einem Rohkraftstoffzulauf 13 in einen oberen Teil des Rohbereichs 10.1 des Filtergehäuses 10.

Der Ringfiltereinsatz 3 besteht aus einem hohlzylindrischen Filtermediumkörper 30, der oben von einer oberen Stirnscheibe 31.1 und unten von einer unteren Stirnscheibe 31.2 eingefasst ist. An der oberen Stirnscheibe 31.1 ist eine Radialdichtung 32.1 angeordnet, die gegen einen oberen Ringbereich 26 des Stützkörpers 2 dichtet. Unter der unteren Stirnscheibe 31.2 ist eine weitere Radialdichtung 32.2 angeordnet, die gegen ein unteres Ende des Stützkörpers 2 sowie einen den Stützkörper 2 tragenden Bereich des Gehäusesockels 11 abdichtet.

Mit zwei Axialdichtungen 27.1 und 27.2 ist der mit dem Gehäusesockel 11 verschraubte Stützkörper 2 gegen den Sockel 11 abgedichtet. Zur Verschraubung dienen die Gewinde 18 und 28. Das Gewinde 18 ist am oberen Ende eines Stützkörperanschraubstutzens 16 angeordnet und das Gewinde 28 ist ein Innengewinde im unteren Endbereich des zweiten Strömungskanals 22 des Stützkörpers 2. Der Stützkörperanschraubstutzen 16 ist von unten her in eine passende Ausnehmung im Sockel 11 eingeführt und besitzt einen vergrößerten Kopf 17, der einen Anschlag bildet.

Der Rohkraftstoffzulauf 13 und der Reinkraftstoffablauf 14 verlaufen senkrecht zur Zeichnungsebenen der Figur 1 aus der Schnittebene nach vorne, so dass sie nur zu einem kleinen Teil sichtbar sind. Der Rohkraftstoffzulauf 13 ist üblicherweise über eine Kraftstoffleitung mit einer eingeschalteten Kraftstoffpumpe mit dem zugehörigen Kraftstofftank verbunden. Der Reinkraftstoffablauf 14 führt üblicherweise über eine weitere Leitung zu einer Kraftstoffeinspritzanlage der zugehörigen Brennkraftmaschine. Der Tankrücklauf 15 läuft vom Zentrum des Gehäusesockels 11 nach links. Über eine nicht dargestellte Verbindungsleitung ist der Tankrücklauf 15 mit dem Kraftstofftank der zugehörigen Brennkraftmaschine verbunden.

Der Gehäusedeckel 12 ist mit dem Filtergehäuse 10 verschraubt und kann zur Wartung des Kraftstofffilters 1 abgeschraubt werden. Im Inneren des Gehäusedeckels 12 ist zwischen diesem und dem Ringfiltereinsatz 3 eine lösbare Rastverbindung 33 angeordnet, die in der Lage ist, axiale Zugkräfte vom Gehäusedeckel 12 auf den Ringfiltereinsatz 3 zu übertragen, die groß genug sind, den Ringfiltereinsatz 3 von dem Gehäusesockel 11 und dem Stützkörper 2 abzuziehen.

Im Betrieb des Kraftstofffilters 1 strömt Rohkraftstoff durch den Rohkraftstoffzulauf 13 in den dritten Strömungskanal 23 des Stützkörpers 2 und in diesem nach oben, wo der Rohkraftstoff aus dem Stützkörper 2 in den Rohbereich 10.1 des Filtergehäuses 10 austritt. Aus dem Rohbereich 10.1 durchströmt der Kraftstoff den Filtermediumkörper 30 des Ringfiltereinsatzes 3 in Radialrichtung von außen nach innen und gelangt dann in den Reinbereich 10.2. Im Reinbereich 10.2 strömt der nun gefilterte Kraftstoff nach oben und tritt dort in den ersten Strömungskanal 21 des Stützkörpers 2 ein. Im Strömungskanal 21 fließt der gefilterte Kraftstoff nach unten zum Reinkraftstoffablauf 14.

Durch die Zuführung des Rohkraftstoffs in den oberen Teil des Rohbereichs 10.1 ergibt sich im Inneren des Filtergehäuses 10 am Außenumfang des Filtermediumkörpers 30 eine nach unten verlaufende Strömung des Kraftstoffs. Diese Strömungsrichtung fördert das Abscheiden von mitgeführten Wassertropfen aus dem Rohkraftstoff und deren Absetzen im Wassersammelraum 40.

Im Rohkraftstoff mitgeführte Schmutzpartikel werden im Filtermediumkörper 30 abgetrennt und gesammelt. Im Rohkraftstoff enthaltene Wassertropfen sammeln sich an dem Filtermediumkörper 30 und perlen bei Erreichen einer bestimmten Größe von diesem ab und sinken aufgrund ihrer höheren Dichte im Kraftstoff nach unten und gelangen so in den Wassersammelraum 40. Der Wassersammelraum 40 im Wassersammelbecher 4 kann in an sich bekannter Weise bei Bedarf automatisch über ein entsprechendes, hier nicht dargestelltes Wasserablassventil entleert werden.

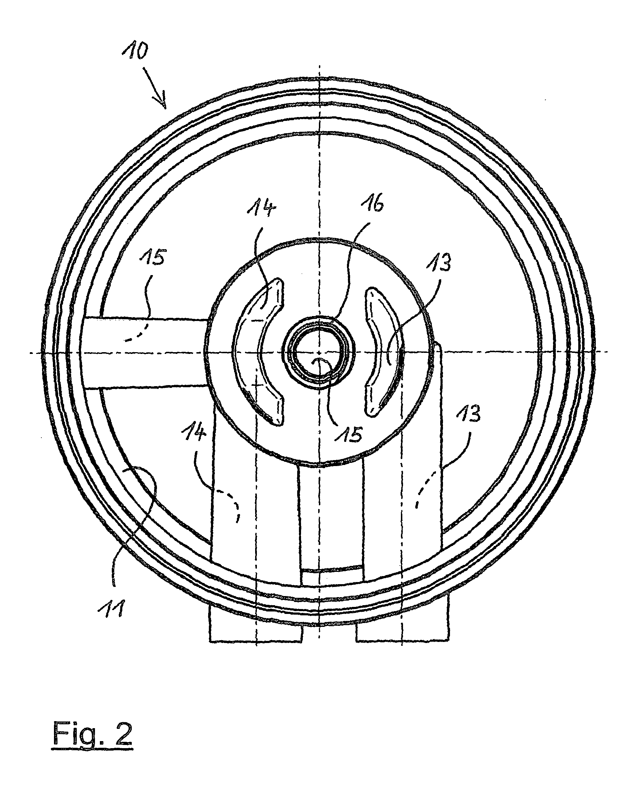

Figur 2 zeigt das Filtergehäuse 10 des Kraftstofffilters aus Figur 1 in einer Ansicht von oben bei entferntem Gehäusedeckel 12 und aus dem Filtergehäuse 10 entnommenem Ringfiltereinsatz 3. Im Zentrum der Figur 2 ist der Tankrücklauf 15 erkennbar, der sich nach links zur Außenseite des Gehäuses 10 fortsetzt. Von unten nach oben, d.h. radial von außen nach innen, verläuft in Figur 2 der Rohkraftstoffzulauf 13; umgekehrt verläuft der Reinkraftstoffablauf 14 parallel dazu. Um den zentralen Tankrücklauf 15 herum ist der Stützkörperanschraubstutzen 16 sichtbar. Im Hintergrund der Figur 2 liegt der Gehäusesockel 11.

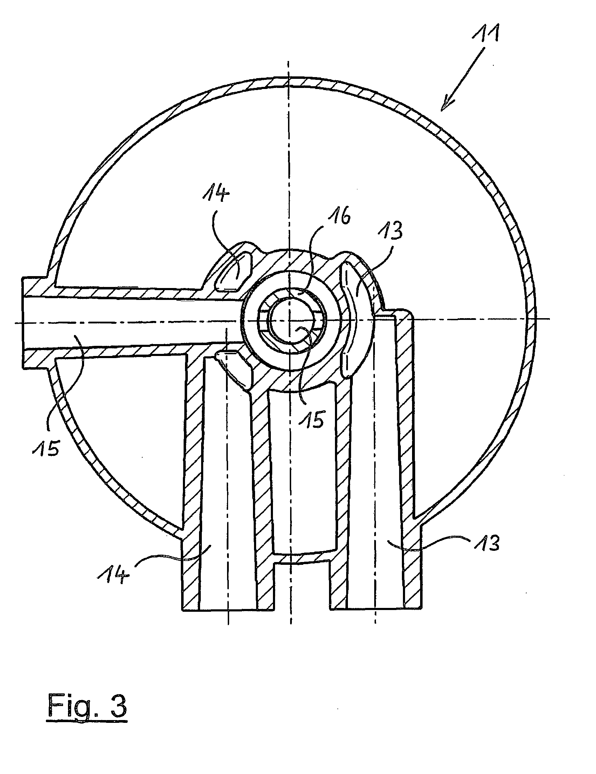

Figur 3 zeigt das Filtergehäuse in einem Querschnitt durch den Gehäusesockel 11. Dabei verläuft der Schnitt durch den Rohkraftstoffzulauf 13, den Reinkraftstoffablauf 14 und den Tankrücklauf 15. Im Zentrum des Gehäusesockels 11 ist der Stützkörperanschraubstutzen 16 sichtbar, durch den ein Abschnitt des Tankrücklaufs 15 verläuft.

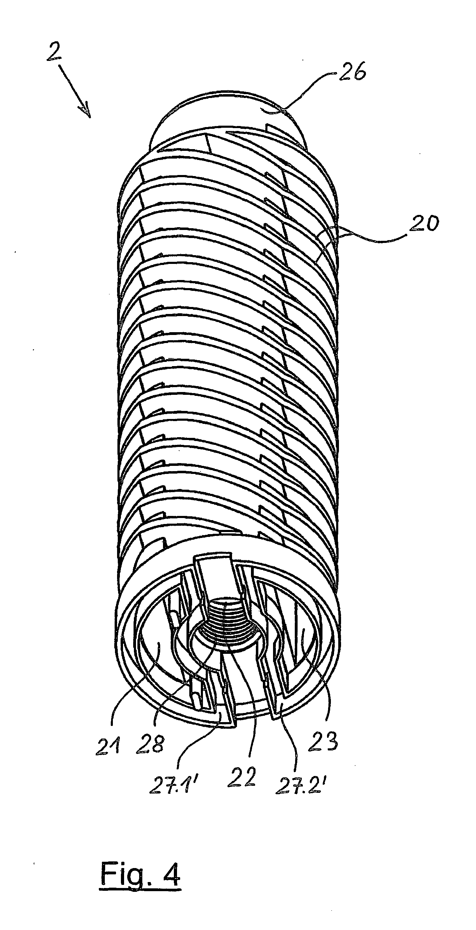

In Figur 4 ist der Stützkörper 2 als Teil des Kraftstofffilters 1 für sich in einer perspektivischen Ansicht schräg von unten dargestellt. Am Außenumfang des Stützkörpers 2 sind die Stützrippen 20 erkennbar. Am unteren Ende des Stützkörpers 2 ist dessen Stirnseite mit den Strömungskanäle 21, 22 und 23 sichtbar. Um den ersten Strömungskanal 21 herum verläuft eine Dichtungsnut 27.1' und um den dritten Strömungskanal 23 herum verläuft eine weitere Dichtungsnut 27.2'. In Zentrum des Stützkörpers 2 ist dessen Gewinde 28 zur Verbindung mit dem Gehäusesockel 11 sichtbar. Am oberen Ende des Stützkörpers 2 befindet sich dessen oberer Ringbereich 26.

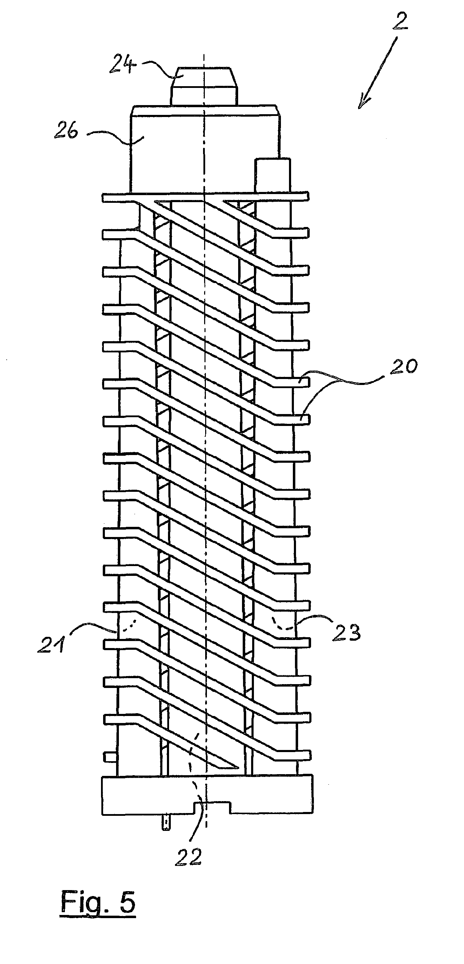

Figur 5 zeigt den Stützkörper 2 wieder als Einzelteil, nun in einer Seitenansicht. Links im Stützkörper 2 verläuft in dessen Längsrichtung der erste Strömungskanal 21. Zentral durch den Stützkörper 2 verläuft der zweite Strömungskanal 22. Rechts verläuft in Längsrichtung des Stützkörpers 2 der dritte Strömungskanal 23. Um die Strömungskanäle 21, 22 und 23 herum verlaufen die Stützrippen 20 in Form von Wendeln. Den oberen Abschluss des Stützkörpers 2 bildet dessen oberes Ende 24. Darunter liegt der obere Ringbereich 26 des Stützkörpers 2, der zur dichtenden Anlage des Ringfiltereinsatzes 3 dient.

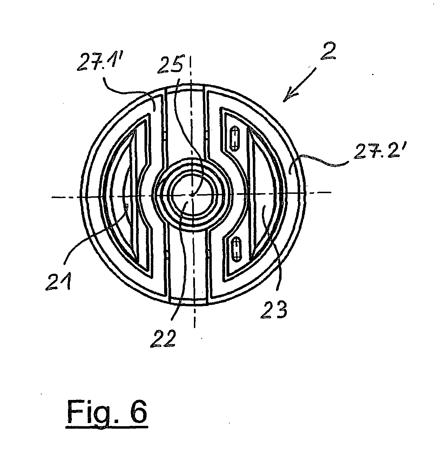

In Figur 6 ist der Stützkörper 2 in einer Ansicht auf seine Unterseite gezeigt. Im Zentrum der Figur 6 reicht der Blick durch den zentralen, zweiten Strömungskanal 22 bis zur Entlüftungsdrossel 25 am oberen Ende des Stützkörpers 2. Links von dem Strömungskanal 23 liegt der erste Strömungskanal 21. Rechts vom zentralen Strömungskanal 22 liegt der dritte Strömungskanal 23. Um den Strömungskanal 21 herum verläuft die Dichtungsnut 27.1'. Um den Strömungskanal 23 herum läuft die Dichtungsnut 27.2'.

Wie eine Zusammenschau der Figuren 2 und 6 verdeutlicht, sind der zentrale Bereich des Sockels 11 und das untere Stirnende des Stützkörpers 2 geometrisch so aufeinander abgestimmt und aneinander angepasst, dass bei mit dem Gehäusesockel 11 fest verschraubtem Stützkörper 2 die Strömungskanäle 21 und 23 mit dem Reinkraftstoffablauf 14 und dem Rohkraftstoffzulauf 13 zur Deckung kommen. Hierzu sind die oben erwähnten Gewinde 18 und 28 so angeordnet, dass sich beim Verschrauben des Stützkörpers 2 mit dem Gehäusesockel 11 eine in Umfangsrichtung definierte Endlage der Verschraubung ergibt, in der die für die Strömungsverbindungen benötigte Überdeckung erzielt wird.

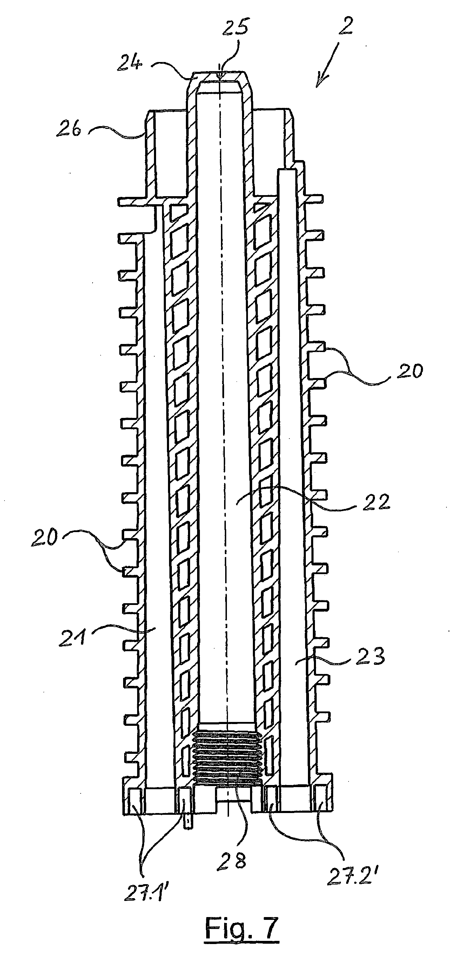

In Figur 7 ist der Stützkörper 2 in einem Längsschnitt gezeigt. Auch hier sind radial außen die Stützrippen 20 erkennbar. Zentral durch den Stützkörper 2 verläuft der zweite Strömungskanal 22. Links davon ist der erste Strömungskanal 21 sichtbar. Rechts vom zentralen Strömungskanal 22 verläuft der dritte Strömungskanal 23. Am unteren Ende des Stützkörpers 2 sind die beiden Dichtungsnuten 27.1' und 27.2' sichtbar. Im unteren Endbereich des zentralen, zweiten Strömungskanals 22 ist das Gewinde 28 sichtbar. Nach oben hin ist der zentrale, zweite Strömungskanal 22 durch das obere Ende 24 des Stützkörpers 2 bis auf die dort angebrachte Entlüftungsdrossel 25 verschlossen. Außerdem ist im oberen Endbereich des Stützkörpers 2 der obere Ringbereich 26 sichtbar.

Anhand der Figuren 4 bis 7 wird ersichtlich, dass der Stützkörper 2 trotz seiner relativ komplizierten Form und der drei darin verlaufenden Strömungskanäle 21 bis 23 vorteilhaft als einstückiges Bauteil spritztechnisch herstellbar ist. Dabei ist der Stützkörper in zwei einander entgegengesetzten Radialrichtungen und in zwei einander entgegengesetzten Axialrichtungen entformbar.

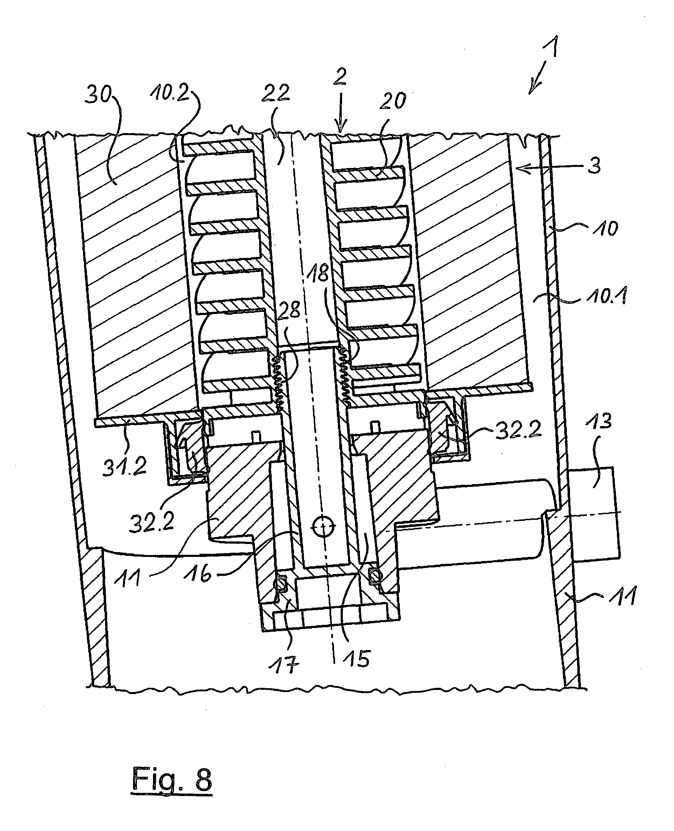

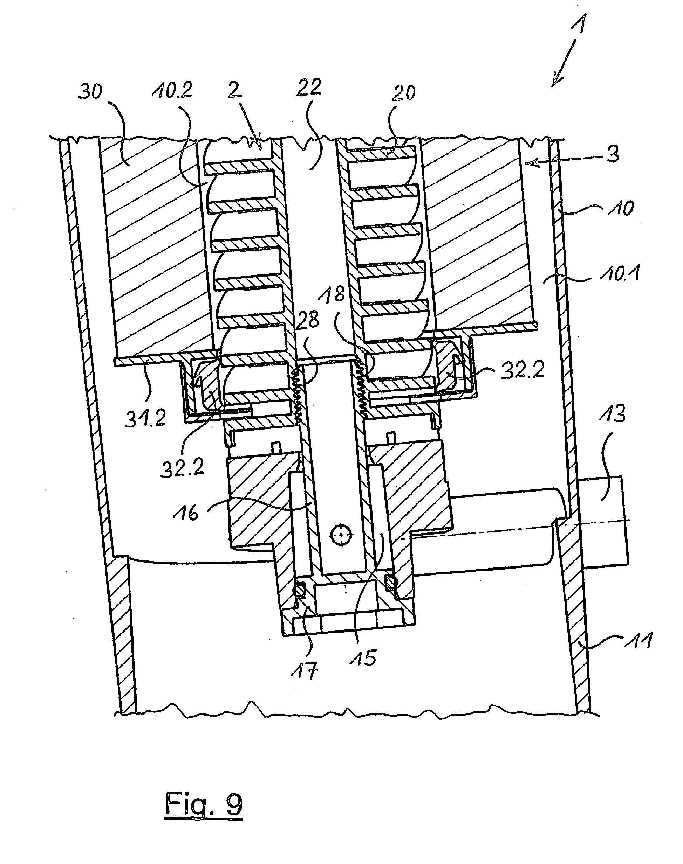

Wie oben im Zusammenhang mit Figur 1 schon erwähnt, besteht zwischen dem Gehäusedeckel 12 und dem Ringfiltereinsatz 3 die Rastverbindung 33. Deren Zweck wird im Folgenden anhand der Figuren 8 und 9 erläutert.

In Figur 8 ist im Längsschnitt ein Ausschnitt aus dem Kraftstofffilter 1 in Höhe des Gehäusesockels 11 und des unteren Teils des Ringfiltereinsatzes 3 dargestellt, wobei hier die Schnittebene gegenüber der Figur 1 um 90° gedreht ist. In Figur 8 ist der Ringfiltereinsatz 3 vollständig in das Filtergehäuse 10 eingeführt und sitzt mit seinem unteren Teil einerseits auf dem unteren Endbereich des Stützkörpers 2 und andererseits auf dem ihm zugewandten zentralen Teil des Sockels 11. Zwischen der unteren Stirnscheibe 31.2 des Ringfiltereinsatzes 3 einerseits und dem Stützkörper 2 sowie dem Gehäusesockel 11 andererseits ist der Radialdichtring 32.2 angeordnet. In dem eingebauten Zustand des Ringfiltereinsatzes 3 überdeckt der Radialdichtring 33.2 aufgrund seiner in Axialrichtung ausreichenden Höhe einen Ringspalt zwischen dem unteren Ende des Stützkörpers 2 und dem Gehäusesockel 11. Dieser im Zustand gemäß Figur 8 überdeckte Ringspalt steht in Strömungsverbindung mit dem Tankrücklauf 15.

Figur 9 zeigt in gleicher Darstellung wie Figur 8 den Ringfiltereinsatz 3 während seines Herausziehens aus dem Filtergehäuse 10. Dieses Herausziehen wird bewirkt durch Abschrauben des Gehäusedeckels 12 unter Mitnahme des Ringfiltereinsatzes 3 über die Rastverbindung 33. Durch die Bewegung des Ringfiltereinsatzes 3 nach oben wird auch die untere Stirnscheibe 31.2 mit dem Radialdichtring 32.2 nach oben bewegt und entfernt sich so von dem Übergangsbereich oder Ringsspalt zwischen dem unteren Ende des Stützkörpers 2 und der Oberseite des zentralen Teils des Gehäusesockels 11. Hierdurch gelangt der Rohbereich 10.1 des Filtergehäuses 10 in Strömungsverbindung mit dem Tankrücklauf 15. Auf diesem Weg kann schon während des Losdrehens des Gehäusedeckels 12 der Kraftstoff aus dem Filtergehäuse 10 durch den Tankrücklauf 15 in den Kraftstofftank abfließen, so dass bei geöffnetem Filtergehäuse 10 der Ringfiltereinsatz 3 praktisch kraftstofffrei entnommen werden kann.

**Bezugszeichenliste:**

| Zeichen | Bezeichnung |
|---|---|
| 1 | Kraftstofffilter |
| 10 | Filtergehäuse |
| 10.1 | Rohbereich |
| 10.2 | Reinbereich |
| 11 | Gehäusesockel |
| 12 | Gehäusedeckel |
| 13 | Rohkraftstoffzulauf |
| 14 | Reinkraftstoffablauf |
| 15 | Tankrücklauf |
| 16 | Stützkörperanschraubstutzen |
| 17 | Kopf von 16 |
| 18 | Gewinde an 16 |
| | |
| 2 | Stützkörper |
| 20 | Stützrippen |
| 21 | erster Strömungskanal |
| 22 | zweiter Strömungskanal |
| 23 | dritter Strömungskanal |
| 24 | oberes Ende von 2 |
| 25 | Entlüftungsdrossel |
| 26 | oberer Ringbereich |
| 27.1,27.2 | Dichtungen |
| 27.1', 27.2' | Dichtungsnuten |
| 28 | Gewinde an 2 |
| 3 | Ringfiltereinsatz |
| 30 | Filtermediumkörper |
| 31.1 | obere Stirnscheibe |
| 31.2 | untere Stirnscheibe |
| 32.1 | Dichtung an 31.1 |
| 32.2 | Dichtung an 31.2 |
| 33 | Rastverbindung zwischen 12 und 3 |
| | |
| 4 | Wassersammelbecher |
| 40 | Wassersammelraum |

## Patentansprüche

1. Kraftstofffilter (1) einer Brennkraftmaschine, insbesondere eines Dieselmotors, mit einem Filtergehäuse (10) mit einem im Betrieb unteren Gehäusesockel (11) und einem im Betrieb oberen, abnehmbaren Gehäusedeckel (12), wobei in dem Filtergehäuse (10) je ein Rohkraftstoffzulauf (13) und Reinkraftstoffablauf (14) vorgesehen sind, wobei im Filtergehäuse (10) ein von dem Kraftstoff radial von außen nach innen durchströmbarer, auswechselbarer Ringfiltereinsatz (3) angeordnet ist, der einen Innenraum des Filtergehäuses (10) in einen Rohbereich (10.1) und einen Reinbereich (10.2) unterteilt, wobei im Inneren des Ringfiltereinsatzes (3) ein Entlüftungsrohr angeordnet ist, durch welches ein einerseits über eine Entlüftungsdrossel (25) oder ein Entlüftungsventil mit dem Rohbereich (10.1) und andererseits mit einem Tankrücklauf (15) in dem Filtergehäuse (10) verbundener Strömungskanal (22) als Entlüftungskanal verläuft, wobei der Rohkraftstoffzulauf (13) im Gehäusesockel (11) des Filtergehäuses (10) angeordnet ist und wobei im oder am Kraftstofffilter (1) ein vom Rohkraftstoffzulauf (13) zu einem im Betrieb oberen Teil des Rohbereichs (10.1) des Innenraums des Filtergehäuses (10) führender Strömungskanal (23) vorgesehen ist,
**dadurch gekennzeichnet,**
**dass** das Entlüftungsrohr als Stützkörper (2) für den Ringfiltereinsatz (3) ausgebildet ist,
**dass** durch den Stützkörper (2) ein einerseits mit dem Reinbereich (10.2) und andererseits mit dem Reinkraftstoffablauf (14) verbundener weiterer Strömungskanal (21) verläuft und
**dass** der vom Rohkraftstoffzulauf (13) zu dem im Betrieb oberen Teil des Rohbereichs (10.1) führende Strömungskanal (23) als dritter Strömungskanal durch den Stützkörper (2) verläuft.

2. Kraftstofffilter nach Anspruch 1, **dadurch gekennzeichnet, dass** einer der drei Strömungskanäle (21; 22; 23) konzentrisch im Stützkörper (2) verläuft und dass die beiden anderen Strömungskanäle (21; 22; 23) exzentrisch und in Umfangsrichtung des Stützkörpers (2) voneinander beabstandet in diesem verlaufen.

3. Kraftstofffilter nach Anspruch 2, **dadurch gekennzeichnet, dass** der konzentrisch im Stützkörper (2) verlaufende Strömungskanal der mit dem Tankrücklauf (15) verbundene, der Entlüftung dienende Strömungskanal (22) ist und dass die Entlüftungsdrossel (25) oder das Entlüftungsventil an einem oberen Ende (24) des Stützkörpers (2) in einer den Rohbereich (10.1) von diesem Strömungskanal (22) trennenden Wandung des Stützkörpers (2) ausgebildet oder angeordnet ist.

4. Kraftstofffilter nach einem der Ansprüche 1 bis 3, **dadurch gekennzeichnet, dass** neben dem Rohkraftstoffzulauf (13) auch der Reinkraftstoffablauf (14) und der Tankrücklauf (15) im Gehäusesockel (11) des Filtergehäuses (10) angeordnet sind und dass am Gehäusesockel (11) Flansch- und/oder Leitungsanschlüsse für den Rohkraftstoffzulauf (13), den Reinkraftstoffablauf (14) und den Tankrücklauf (15) vorgesehen sind.

5. Kraftstofffilter nach Anspruch 4, **dadurch gekennzeichnet, dass** der Stützkörper (2) an seinem unteren Ende mechanisch mit dem Gehäusesockel (11) und strömungsmäßig mit dem Rohkraftstoffzulauf (13), dem Reinkraftstoffablauf (14) und dem Tankrücklauf (15) verbunden ist.

6. Kraftstofffilter nach Anspruch 5, **dadurch gekennzeichnet, dass** der Gehäusesockel (11) und der Stützkörper (2) mit zusammenwirkenden Gewinden (17, 27) für deren Verbindung miteinander versehen sind und dass die Gewinde (17, 27) so ausgebildet sind, dass im miteinander verschraubten Zustand der Stützkörper (2) relativ zum Gehäusesockel (11) in Umfangsrichtung eine definierte, für die strömungsmäßige Verbindung mit dem Rohkraftstoffzulauf (13), dem Reinkraftstoffablauf (14) und dem Tankrücklauf (15) winkelgerechte Stellung einnimmt.

7. Kraftstofffilter nach einem der Ansprüche 1 bis 6, **dadurch gekennzeichnet, dass** der Stützkörper (2) mit den darin verlaufenden drei Strömungskanälen (21; 22; 23) ein einstückiges Spritzgussteil aus Kunststoff oder ein einstückiges Druckgussteil aus Leichtmetall ist.

8. Kraftstofffilter nach einem der Ansprüche 1 bis 7, **dadurch gekennzeichnet, dass** der Gehäusesockel (11) mit einem im Betrieb einen untersten Teil des Kraftstofffilters (1) bildenden Wassersammelraum (40) ausgeführt oder verbunden ist.

9. Kraftstofffilter nach einem der Ansprüche 1 bis 8, **dadurch gekennzeichnet, dass** der Gehäusedeckel (12) und der Ringfiltereinsatz (3) über eine axiale Zugkräfte übertragende, lösbare Rastverbindung (32) miteinander verbunden sind und dass durch eine Bewegung des Gehäusedeckels (12) zusammen mit dem Ringfiltereinsatz (3) relativ zum Filtergehäuse (10) und zum Stützkörper (2) nach oben eine unmittelbare Strömungsverbindung von dem Rohbereich (10.1) zu dem Tankrücklauf (15) freigebbar ist.

## Claims

1. A fuel filter (1) for an internal combustion engine, in particular a diesel engine, comprising a filter housing (10) having a housing base (11), which is on the bottom during operation, and a removable housing lid (12), which is on the top during operation, wherein provision is in each case made in the filter housing (10) for a raw fuel inlet (13) and for a clean fuel outlet (14), wherein a replaceable ring filter insert (3), through which the fuel can flow from radially outside to the inside and which divides an interior of the filter housing (10) into a raw area (10.1) and a clean area (10.2), is arranged in the filter housing (10), wherein a venting pipe is arranged in the interior of the ring filter insert (3), through which venting pipe a flow channel (22), which is connected on the one side to the raw area (10.1) via a venting throttle (25) or a venting valve and, on the other side to a tank return (15) in the filter housing (10), runs as venting channel, wherein the raw fuel inlet (13) is arranged in the housing base (11) of the filter housing (10) and wherein provision is made in or on the fuel filter (1) for a flow channel (23), which leads from the raw fuel inlet (13) to a part of the raw area (10.1) of the interior of the filter housing (10), which is on the top during operation,
**characterized in that**
the venting pipe is embodied as support body (2) for the ring filter insert (3), that a further flow channel (21), which is connected to the clean area (10.2) on the one side and to the clean fuel outlet (14) on the other side, runs through the support body (2), and
that the flow channel (23), which leads from the raw fuel inlet (13) to the part of the raw area (10.1), which is on the top during operation, runs through the support body (2) as third flow channel.

2. The fuel filter according to claim 1, **characterized in that** one of the three flow channels (21; 22; 23) runs concentrically in the support body (2) and that the two other flow channels (21; 22; 23) run eccentrically and so as to be spaced apart from one another in peripheral direction of the support body (2) in said support body.

3. The fuel filter according to claim 2, **characterized in that** the flow channel, which runs concentrically in the support body (2), is the flow channel (22), which is connected to the tank return (15) and which serves for venting purposes, and that the venting throttle (25) or the venting valve is embodied or arranged at an upper end (24) of the support body (2) in a wall of the support body (2), which separates the raw area (10.1) from said flow channel (22).

4. The fuel filter according to any one of claims 1 to 3, **characterized in that**, in addition to the raw fuel inlet (13), the raw fuel outlet (14) and the tank return (15) are also arranged in the housing base (11) of the filter housing (10) and that provision is made on the housing base (11) for flange and/or line connections for the raw fuel inlet (13), the clean fuel outlet (14) and the tank return (15).

5. The fuel filter according to claim 4, **characterized in that**, on its lower end, the support body (2) is connected mechanically to the housing base (11) and is flow-connected to the raw fuel inlet (13), the clean fuel outlet (14) and the tank return (15).

6. The fuel filter according to claim 5, **characterized in that** the housing base (11) and the support body (2) are provided with interacting threads (17, 27) for connecting them to one another, and that the threads (17, 27) are embodied such that, when screwed to one another, the support (2) assumes a defined position in peripheral direction, which is angle-correct for the flow-connection to the raw fuel inlet (13), the clean fuel outlet (14) and the tank return (15), relative to the housing base (11).

7. The fuel filter according to any one of claims 1 to 6, **characterized in that** the support body (2) with the three flow channels (21; 22; 23), which run therein, is a one-piece injection molding part made of plastic or a one-piece pressure die cast part made of light metal.

8. The fuel filter according to any one of claims 1 to 7, **characterized in that** the housing base (11) is embodied with or connected to a water collecting space (40), which forms a part of the fuel filter (1) and which is on the very bottom during operation.

9. The fuel filter according to any one of claims 1 to 8, **characterized in that** the housing lid (12) and the ring filter insert (3) are connected to one another via a releasable snap-lock connection (32), which transfers axial tractive forces, and that a direct flow connection from the raw area (10.1) to the tank return (15) can be released by means of an upwards movement of the housing lid (12) together with the ring filter insert (3) relative to the filter housing (10) and to the support body (2).

## Revendications

1. Filtre à carburant (1) d'un moteur à combustion interne, en particulier d'un moteur diesel, comportant un boîtier de filtre (10) pourvu d'un socle de boîtier (11) inférieur pendant le fonctionnement et d'un couvercle de boîtier amovible (12) supérieur pendant le fonctionnement, respectivement une entrée de carburant brut (13) et une sortie de carburant propre (14) étant prévues dans le boîtier de filtre (10), dans ledit boîtier de filtre (10) étant agencé un insert filtrant annulaire remplaçable (3) qui peut être traversé par le carburant radialement de l'extérieur vers l'intérieur et qui subdivise un espace intérieur du boîtier de filtre (10) en une zone brute (10.1) et une zone propre (10.2), à l'intérieur de l'insert filtrant annulaire (3) étant agencé un tube de purge d'air par lequel passe, en tant que canal de purge d'air, un canal d'écoulement (22) relié, dans le boîtier de filtre (10), à la zone brute (10.1) via un étranglement de purge d'air (25) ou une soupape de purge d'air, d'une part, et à un retour au réservoir (15), d'autre part, l'entrée de carburant brut (13) étant située dans le socle de boîtier (11) du boîtier de filtre (10), et un canal d'écoulement (23) allant de l'entrée de carburant brut (13) vers une partie, supérieure pendant le fonctionnement, de la zone brute (10.1) de l'espace intérieur du boîtier de filtre (10) étant prévu,
**caractérisé en ce que**
le tube de purge d'air se présente sous la forme d'un corps d'appui (2) pour l'insert filtrant annulaire (3),
un autre canal d'écoulement (21), relié à la zone propre (10.2), d'une part, et à la sortie de carburant propre (14), d'autre part, passe par le corps d'appui (2), et
le canal d'écoulement (23) qui va de l'entrée de carburant brut (13) vers la partie, supérieure pendant le fonctionnement, de la zone brute (10.1) traverse le corps d'appui (2) en tant que troisième canal d'écoulement.

2. Filtre à carburant selon la revendication 1, **caractérisé en ce qu'**un des trois canaux d'écoulement (21; 22; 23) est agencé concentriquement dans le corps d'appui (2) et **en ce que** les deux autres canaux d'écoulement (21; 22; 23) sont agencés excentriquement dans ledit corps d'appui (2) et dans le sens de son pourtour à une distance l'un de l'autre.

3. Filtre à carburant selon la revendication 2, **caractérisé en ce que** le canal d'écoulement agencé concentriquement dans le corps d'appui (2) est le canal d'écoulement (22) qui sert à la purge d'air et qui est relié au retour (15) au réservoir et **en ce que** l'étranglement de purge d'air (25) ou la soupape de purge d'air sont réalisés ou agencés au niveau d'une extrémité supérieure (24) du corps d'appui (2) dans une paroi du corps d'appui (2) qui sépare la zone brute (10.1) de ce canal d'écoulement (22).

4. Filtre à carburant selon l'une des revendications 1 à 3, **caractérisé en ce que**, outre l'entrée de carburant brut (13), la sortie de carburant propre (14) et le retour (15) au réservoir sont également agencés dans le socle de boîtier (11) du boîtier de filtre (10) et **en ce que** sont prévus, au niveau du socle de boîtier (11), des raccords à bride et/ou de conduites pour l'entrée de carburant brut (13), la sortie de carburant propre (14) et le retour (15) au réservoir.

5. Filtre à carburant selon la revendication 4, **caractérisé en ce que** le corps d'appui (2) est, en son extrémité inférieure, relié mécaniquement au socle de boîtier (11) et en termes d'écoulement à l'entrée de carburant brut (13), à la sortie de carburant propre (14) et au retour (15) au réservoir.

6. Filtre à carburant selon la revendication 5, **caractérisé en ce que** le socle de boîtier (11) et le corps d'appui (2) sont pourvus de filetages (17, 27) qui coopèrent pour les relier entre eux et **en ce que** les filetages (17, 27) sont réalisés de manière telle que, à l'état vissé, le corps d'appui (2) prend, relativement au socle de boîtier (11), dans le sens du pourtour, une position définie et adaptée angulairement pour la liaison d'écoulement avec l'entrée de carburant brut (13), la sortie de carburant propre (14) et le retour (15) au réservoir.

7. Filtre à carburant selon l'une des revendications 1 à 6, **caractérisé en ce que** le corps d'appui (2) et les trois canaux d'écoulement (21; 22; 23) agencés dedans sont une monopièce en matière plastique moulée par injection ou une monopièce en métal léger moulée sous pression.

8. Filtre à carburant selon l'une des revendications 1 à 7, **caractérisé en ce que** le socle de boîtier (11) est réalisé avec un espace collecteur d'eau (40) qui forme une partie inférieure du filtre à carburant (1) pendant le fonctionnement, ou est relié à un tel espace.

9. Filtre à carburant selon l'une des revendications 1 à 8, **caractérisé en ce que** le couvercle de boîtier (12) et l'insert filtrant annulaire (3) sont reliés entre eux par une liaison par encliquetage (32) détachable qui transmet des forces de traction axiales et **en ce qu'**une liaison d'écoulement directe allant de la zone brute (10.1) au retour (15) au réservoir peut être libérée par un mouvement conjoint du couvercle de boîtier (12) et de l'insert filtrant annulaire (3) vers le haut relativement au boîtier de filtre (10) et au corps d'appui (2).
